# EUROPEAN PATENT SPECIFICATION

(11) **EP 1 394 971 B1**
(45) Date of publication and mention of the grant of the patent: **06.05.2004**
(21) Application number: 02360250.1
(22) Date of filing: 30.08.2002
(51) Int. Cl.: H04B 10/213

(54) **Optical tranceivers for path-protected passive optical metro access rings**
Optische Sender-Empfänger für pfadgeschützte passive optische Metrozugriffringe
Transducteurs optiques pour anneaux d'accés métropolitains optiques passifs à trajet protégé

(43) Date of publication of application: 03.03.2004
(73) Proprietor: ALCATEL, 75008 Paris (FR)
(72) Inventor: Krimmel, Heinz, 70825 Korntal-Münchingen (DE); Schmuck, Harald, 71701 Schwieberdingen (DE); Witte, Martin, 70435 Stuttgart (DE); Deppisch, Bernhard, 70825 Korntal-Münchingen (DE); Pfeiffer, Dr. Thomas, 70569 Stuttgart (DE)
(74) Representative: Brose, Gerhard, Dipl.-Ing.

(56) References cited:
- EP-A- 0 277 746
- EP-A- 1 063 803
- US-B1- 6 321 004
- US-B1- 6 351 582

## Description

### Technical Field of the Invention

The invention relates to a network component for an optical network. More precisely the invention discloses a transceiver for passive metro rings.

### Prior Art

For network resilience reasons in passive metro rings components are connected through redundant optical lines. At the transmitters the optical information is either switched between two redundant paths (1: 1 protection) or split and passed simultaneously into at least two paths e.g. fibers (1 + 1 protection). An optical fiber switch can be used to switch between two independent optical paths at both ends of the fiber link. Optical fiber switches need a control entity and a power supply. In cases where the switch is located in a passive node a remote control and remote powering is required. In the latter case the optical switch on one end can be avoided and substituted by a fiber coupler to feed both optical paths. The splitting in a symmetrical optical coupler introduces a splitting loss, which is higher than necessary and reduces the maximum fiber ring circumference by up to approx. 6km, which is 25% of the passive ring's total circumference. Thus, the state of the art is only a good solution when nothing is known about the fiber paths' attenuation.
In the US 6,351,582 a passive optical network is disclosed. This networks comprises a couple of passive splitting devices where the splitting ration is asymmetric. The network solution is fine for protecting the transmission over the passive ring but the whole power consumption is not optimal.

### Background of the invention

One of the key problems is the mitigation of the (fiber-) span limiting effect of the fiber couplers. The power loss results from the path protection applied in passive metre rings using redundant fibers. The corresponding problem caused by the avoidance of optical switches is the limited power supply of the passive metro nodes, which makes it necessary to reduce the energy consumption.

### Summary of the invention

It is therefore a target of the present invention to provide a device that reduces the loss of light. The passive metro rings span is significantly limited through the lack of optical amplification options and also of electrical regeneration in transit nodes. The unique fact, that the attenuation of the working path is the complement of the attenuation of the protection path is not exploited in the prior art. According to the invention asymmetrical optical splitting with a splitting ratio corresponding to the respective path attenuation is used. The splitting device could be an optical fiber coupler.

The invention extends the maximum fiber span in path protected passive metro rings by up to 25%, without the need of optical switches. The total costs are reduced because of the simple components.

Other objects and advantages of the present invention may be ascertained from a reading of the specification and depended claims in conjunction with the drawings wherein.

### Detailed Description

The basic idea of this invention consists in applying an optical splitting device in front of the optical transceivers, which has in general an asymmetrical splitting ratio. The splitting is an ideal solution for the special conditions of the upcoming metro ring networks with entirely passive nodes in the metro access level and fiber path protection. The excess attenuation caused by the beam which is split and passed into the two paths can be adapted to the asymmetrical fiber link attenuation of the respective paths the device is connected to. The existence of one master node results in different spans/path attenuation on a passive ring. Different splitting ratios are required, e.g. 1:1, 1:2, 1:5, 1:10, to reduce the overall loss. A variable /configurable splitting ratio is also useful. The splitter could be integrated in the transceiver and could be set mechanically/electronically to exploit the output power/sensitivity of the E/O and O/E converters.

Another part of the invention is a network component for an optical network, comprising a transceiver, and an optical splitting device, which is installed in front of the optical transmitter or receiver. The optical splitting device has an asymmetrical splitting ratio, transferring light into or accepting light form different fibers.

The preferred embodiments of the invention are set forth in the dependent claims.

This component is preferably connected to a path-protected passive-optical metre access ring, wherein the ring segments provide a redundancy. The asymmetrical splitting ratio of the optical splitting device corresponds to the attenuation of the ring segments it is connected to. The attenuation is generally related to the length of the path.

In a preferred embodiment the splitting ratio of said optical splitting device is adjustable, in particular by mechanic or electronic means.

In another embodiment a multiplexer is used to connect a plurality of customer sites to one network node hosting one or more optical splitting devices having the same splitting ratio. The multiplexer can be located at different positions. It can be directly integrated into the network node. In an alternative embodiment the multiplexer is located close to a group of clients or stations.
The multiplexer can also be positioned in front of the optical splitter module or behind the module.
It is obvious to those skilled in the art that the multiplexer can also be located at other positions.

The optical splitting device is a fiber device (e.g. fused fiber coupler), a bulk optic device (e.g. lens coupled mirror) or an integrated optic device including also micro-mechanic embodiments which can be adjusted. In a preferred embodiment it is self-adjusting. The adjustment can be driven by the master node, that transmits information about the difference of the detected light intensity of both segments to the passive node. After receiving the message the passive node can adjust the ratio.

Another part of the invention is a network comprising the network module described above and a method of driving a passive optical ring network.

Although no multiple referenced claims are drawn, all reasonable combinations of the features in the claims shall be disclosed.

### Description of the drawings

For a more complete understanding of the present invention, reference is established to the following description made in connection with accompanying drawings in which:
Fig. 1 shows a network consisting of a plurality of passive nodes connecting stations, communicating with a master node;
Fig. 2 shows a network consisting of a plurality of passive nodes, connecting stations communicating with a master node, wherein a passive-node-located multiplexer connects a plurality of stations with the network;
Fig. 3 shows an alternative embodiment of the network shown in Fig. 2 providing a different protection scheme.

Passive metro-access rings providing high bandwidth at moderate cost gain importance to bridge (e.g. with giga bit Ethernet technology) the metro gap. However, path restoration is a must for carrier-class networks. The attenuation caused by the components, serving two independent optical paths, cuts the maximum bridgeable distance and the possible coverage of the metro network. Since the transceivers have only moderate output power (eye safety) the available power budget is rather limited. Measures are necessary to exploit the maximum resources. The closer a station is to the master node the longer is the redundant link, e.g. located at the One o'clock position on the passive ring, the signal has to pass the entire circumference on the 'long path'. The path attenuation follows the fiber length.

In all figures the nodes communicate ptp (Point to Point) with the master node along two diverse paths, which are assumed to be passive and do not provide multiplexing or a regeneration functionality. Except the node located at the 6 o'clock position communicates over two paths with equal length and attenuation.

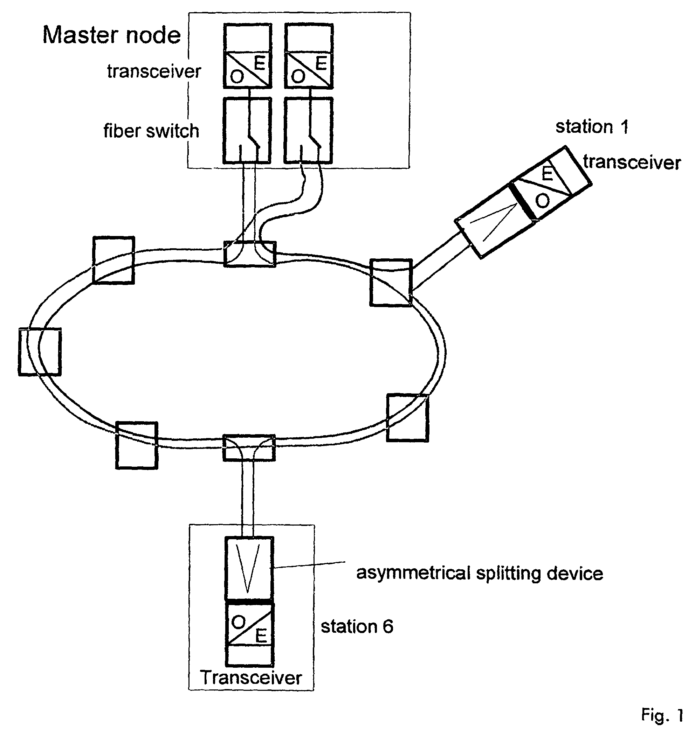

All figures show only a single transmission direction, in this case 'upstream', that means from the customer towards the master node. The corresponding reverse direction has an equivalent topology e.g. with on asymmetrical split in front of the receiver or a common splitter for single fiber transceivers. Figure 1 shows a principal configuration with a network comprising passive nodes and stations 1 and 6 including a transceiver and a splitting device . The optical splitting device of station 1 has an asymmetrical splitting ratio, transferring light into different fibers and accepting light from different fibers, wherein the splitting ratio of station 6 is symmetric. The splitter, can be a fiber coupler and can be collocated with the transceiver or can be located in the passive node

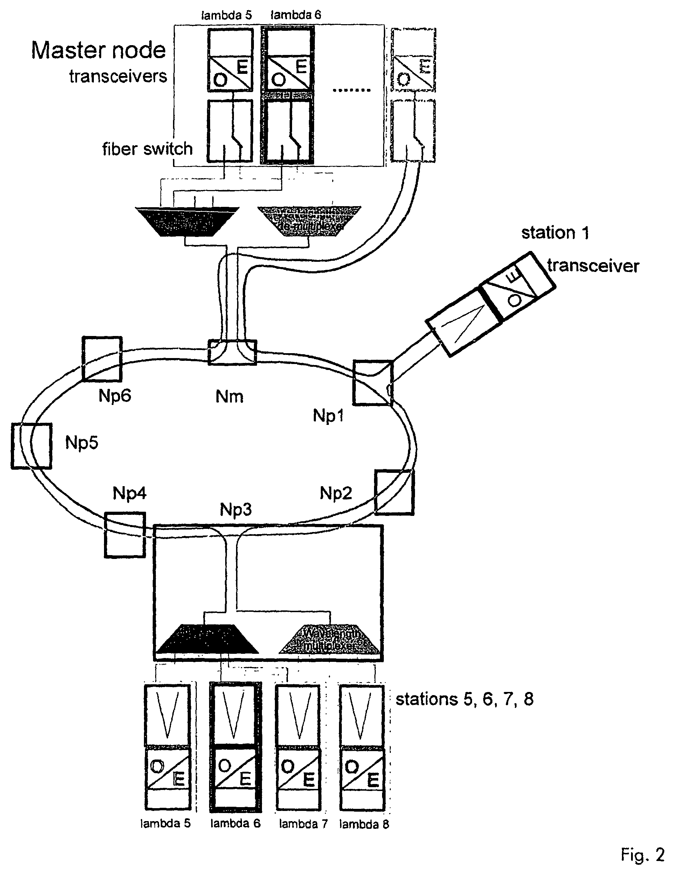

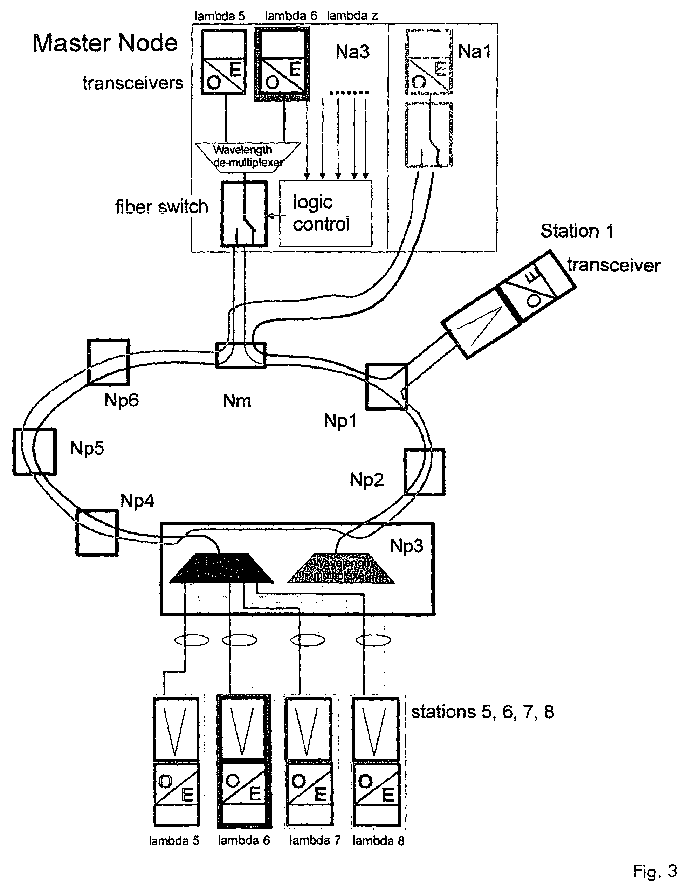

Figures 2 and 3 show wavelength multiplexing in the passive nodes (Np). The stations 5 to 8 comprise a plurality of transceivers coupled to wavelength multiplexers. All customer transceivers in the stations communicate with the corresponding transceiver in the master node. Wavelength division multiplexing (WDM) enables the simultaneous communication of all transceiver pairs. Figure 2 shows on individually protected fiber ring circuitry, allowing a random use of the wavelengths not allocated for protection. Figure 3 shows the corresponding circuitry with reduced flexibility, where the protection is bundled for all stations of a distinct node for the advantage of simplified demultiplexing in the master node.

## Claims

1. A network component for an optical passive network, where the network comprises two independent optical paths master nodes and passive nodes (Np), the passive nodes are connected to both optical paths via optical splitting device, the optical splitting device has an asymmetrical splitting ratio, transferring light into different fibers or accepting light from different fibers and **characterized in that** the splitting ratio is adjustable according to the difference of detected light intensity of both ring segments of the both optical paths.

2. The network component according to claim 1, wherein said optical transceiver is connected to a path-protected passive-optical metro access ring.

3. The network component according to claim 1, wherein the splitting ratio of said optical splitting device is adjustable, in particular by mechanic or electronic means.

4. The network component according to claim 1, wherein a multiplexer is connected between the optical splitting device and said optical transceiver or wherein a multiplexer is connected behind the optical splitting device and said optical transceiver.

5. The network component according to claim 1, wherein the optical splitting device is an all-fiber device (e.g. fused fiber coupler), a bulk optic device (e.g. a lens-coupled mirror), an integrated optic arrangement or a micro mechanical setup (MEMS)

6. A passive optical ring network, wherein the network comprises a network node according to claim 1.

7. The passive optical ring network according to claim 6, wherein the network comprises at least one optical transceiver having an asymmetrical optical splitting device being connected to asymmetrical ring segments, wherein the optical asymmetrical splitting ratio corresponds to the attenuation ratio of the ring segments.

8. The passive optical ring network according to claim 6, wherein the network comprises optical transceiver with an optical splitting device having an asymmetrical splitting ratio, which is adapted to path attenuation of the optical transceiver in the access ring.

9. The passive optical ring network according to claim 6, wherein a multiplexer connects a plurality of customer stations to the network.

10. A method of driving a passive optical ring network, wherein a node comprising an optical transmitter or receiver, in particular a transceiver, being connected to asymmetrical ring segments, splits the light corresponding to the attenuation ratio of the ring segments, where the splitting ratio is adjustable according to the difference of detected light intensity of both ring segments of both optical paths.

11. The method according to claim 10, wherein the splitting ratio is self-adjusting.

## Patentansprüche

1. Eine Netzwerk-Komponente für ein passives optisches Netzwerk, wobei das Netzwerk Haupt-Knoten und passive Knoten (Np) von zwei unabhängigen optischen Pfaden enthält, wobei die passiven Knoten über ein optisches Verteiler-Bauelement an beide optischen Pfade angeschlossen sind und wobei das optische Verteiler-Bauelement ein asymmetrisches Verteil-Verhältnis hat und Licht in zwei unterschiedliche Fasern sendet oder Licht von zwei unterschiedlichen Fasern empfängt und **dadurch gekennzeichnet ist, dass** das Verteil-Verhältnis gemäß der Differenz der gemessenen Lichtintensität beider Ring-Segmente beider optischer Pfade einstellbar ist.

2. Die Netzwerk-Komponente gemäß Anspruch 1, worin der optische Sender-Empfänger an einen pfadgeschützten passiven optischen Metrozugriffring angeschlossen ist.

3. Die Netzwerk-Komponente gemäß Anspruch 1, worin das Verteil-Verhältnis des optischen Verteilers einstellbar ist, insbesondere durch mechanische oder elektronische Mittel.

4. Die Netzwerk-Komponente gemäß Anspruch 1, worin ein Multiplexer zwischen dem optischen Verteiler und dem optischen Sender-Empfänger angeschlossen ist, oder worin ein Multiplexer hinter dem optischen Verteiler und dem optischen Sender-Empfänger angeschlossen ist.

5. Die Netzwerk-Komponente gemäß Anspruch 1, worin der optische Verteiler ein nur aus Fasern bestehendes Bauelement (z.B. ein angeschmolzener Faserkoppler), ein optisches Gerät (z.B. ein durch Linsen gekoppelter Spiegel), eine integrierte optische Anordnung oder ein mikromechanischer Aufbau (MEMS) ist.

6. Ein passives optisches Ringnetz, worin das Netzwerk einen Netzknoten gemäß Anspruch 1 enthält.

7. Das passive optische Ringnetz gemäß Anspruch 6, worin das Netzwerk mindestens einen optischen Sender-Empfänger enthält, der ein asymmetrisches optisches Verteiler-Bauelement hat, das an asymmetrische Ring-Segmente angeschlossen ist, worin das asymmetrische optische Verteil-Verhältnis dem Dämpfungsverhältnis der Ring-Segmente entspricht.

8. Das passive optische Ringnetz gemäß Anspruch 6, worin das Netzwerk optische Sender-Empfänger mit einem optischen Verteiler-Bauelement enthält, das ein asymmetrisches Verteil-Verhältnis aufweist, und das an die Pfad-Dämpfung des optischen Sender-Empfängers im Zugriffsring angepasst ist.

9. Das passive optische Ringnetz gemäß Anspruch 6, worin ein Multiplexer eine Vielzahl von Teilnehmerstationen mit dem Netzwerk verbindet.

10. Ein Verfahren zum Betreiben eines passiven optischen Ringnetzes, worin ein Knoten, der einen optischen Sender oder Empfänger enthält, speziell einen Sender-Empfänger, der an asymmetrische Ring-Segmente angeschlossen ist, das Licht gemäß dem Dämpfungsverhältnis der Ring-Segmente aufteilt, wobei das Verteil-Verhältnis gemäß der Differenz der gemessenen Lichtintensität von beiden Ring-Segmenten beider optischer Pfade einstellbar ist.

11. Das Verfahren gemäß Anspruch 10, wobei das Verteil-Verhältnis selbstjustierend ist.

## Revendications

1. Composant de réseau pour un réseau passif optique, dans lequel le réseau comprend deux noeuds maîtres à chemins optiques indépendants et des noeuds passifs (Np), les noeuds passifs sont reliés aux deux chemins optiques par l'intermédiaire d'un dispositif de division optique, le dispositif de division optique présente un rapport de division asymétrique, transférant la lumière dans différentes fibres ou acceptant de la lumière en provenance de différentes fibres et **caractérisé en ce que** le rapport de division est ajustable selon la différence de l'intensité de lumière détectée des deux segments de boucle des deux chemins optiques.

2. Composant de réseau selon la revendication 1, dans lequel ledit émetteur/ récepteur optique est relié à une boucle d'accès métropolitaine optique passive à chemin protégé.

3. Composant de réseau selon la revendication 1, dans lequel le rapport de division dudit dispositif de division optique est ajustable, en particulier par des moyens mécaniques ou électroniques.

4. Composant de réseau selon la revendication 1, dans lequel un multiplexeur est relié entre le dispositif de division optique et ledit émetteur/ récepteur optique ou dans lequel un multiplexeur est relié derrière le dispositif de division optique et ledit émetteur/ récepteur optique.

5. Composant de réseau selon la revendication 1, dans lequel le dispositif de division optique est un dispositif entièrement en fibre optique (par exemple un coupleur optique par fusion), un dispositif optique de volume (par exemple un miroir couplé à l'objectif), un agencement optique intégré ou une configuration micromécanique (MEMS).

6. Réseau à boucle optique passive, dans lequel le réseau comprend un noeud de réseau selon la revendication 1.

7. Réseau à boucle optique passive selon la revendication 6, dans lequel le réseau comprend au moins un émetteur/ récepteur optique avec un dispositif de division optique asymétrique relié à des segments de boucle asymétriques, dans lequel le rapport de division asymétrique optique correspond au rapport d'atténuation des segments de boucle.

8. Réseau à boucle optique passive selon la revendication 6, dans lequel le réseau comprend l'émetteur/récepteur optique avec un dispositif de division optique ayant un rapport de division asymétrique, qui est adapté à l'atténuation de chemin de l'émetteur/ récepteur optique dans la boucle d'accès.

9. Réseau à boucle optique passive selon la revendication 6, dans lequel un multiplexeur relie une pluralité de stations client au réseau.

10. Procédé de commande d'un réseau à boucle optique passive, dans lequel un noeud comprenant un émetteur ou récepteur optique, en particulier un émetteur/ récepteur, relié à des segments de boucle asymétriques, divise la lumière selon le rapport d'atténuation des segments de boucle, où le rapport de division est ajustable selon la différence de l'intensité de lumière détectée des deux segments de boucle des deux chemins optiques.

11. Procédé selon la revendication 10, dans lequel le rapport de division est ajusté automatiquement.
